# EUROPÄISCHE PATENTSCHRIFT

(11) **EP 2 081 267 B1**
(45) Veröffentlichungstag und Bekanntmachung des Hinweises auf die Patenterteilung: **12.01.2011**
(21) Anmeldenummer: 08017262.0
(22) Anmeldetag: 01.10.2008
(51) Int. Cl.: H02G 3/14

(54) **Abdeckanordnung**
Cover assembly
Agencement de couvercle

(30) Priorität: 19.01.2008 DE 102008005232
(43) Veröffentlichungstag der Anmeldung: 22.07.2009
(73) Patentinhaber: Berker GmbH & Co. KG, 58579 Schalksmühle (DE)
(72) Erfinder: Höller, Guido, 58256 Ennepetal (DE); Dossow, Andreas, Dipl.-Wirt. Ing., 45138 Essen (DE); Knorr, Jens, Dipl.-Ing., 58791 Werdohl (DE); Klauer, Wilfried, 58091 Hagen (DE)

(56) Entgegenhaltungen:
- DE-A1-102004 024 093
- US-A- 5 457 286

## Beschreibung

Die vorliegende Erfindung geht von einer gemäß Oberbegriff des Hauptanspruches konzipierten Abdeckanordnung für elektrische Installationsgeräte aus.

Derartige Abdeckanordnung bilden den aus sicherheitstechnischen Gründen notwendigen, formschön gestalteten Abschluss elektrischer Installationsgeräte der Gebäudesystemtechnik, wie z. B. Schalter, Taster, Steckdosen, Displays usw. In diesem Zusammenhang sind vielfältige Ausführungen mit unterschiedlichen Designs solcher Abdeckanordnungen vorbekannt.

Durch die DE 100 20 217 B4 und die DE 10 2004 024 093 A1 sind jeweils dem Oberbegriff entsprechende Abdeckanordnung für elektrische Installationsgeräte bekannt geworden. Diese Abdeckanordnung bestehen aus einem, zumindest eine Durchtrittsöffnung aufweisenden Grundteil, zumindest einem Befestigungsteil und zumindest einem Designteil. Solche Abdeckanordnungen sind wegen ihrer Ausgestaltung jedoch nicht immer flexibel genug für unterschiedliche Anwendungsfälle einsetzbar, weil bei der Designauswahl Rücksicht auf das für den Betrachter sichtbar werdende Grundteil genommen werden muss.

Der vorliegenden Erfindung liegt deshalb die Aufgabe zugrunde, eine Abdeckanordnung zu schaffen, bei welcher zum einen auf einfache Art und Weise ein modularer Aufbau realisiert ist und bei welcher zum anderen dem Grundteil auf einfache Art und Weise wunschgemäß unterschiedliche Designteile zugeordnet werden können, ohne dass auf die optischen Gegebenheiten des Grundteils Rücksicht genommen werden muss.

Diese Aufgabe wird durch die im Hauptanspruch angegebenen Merkmale gelöst.

Bei einer solchermaßen ausgebildeten Abdeckanordnung für elektrische Installationsgeräte ist besonders vorteilhaft, dass sich mit unterschiedlich ausgeführten bzw. gestalteten Oberflächen der Designteile vielfältige Möglichkeiten bieten, je nach Wunsch des Benutzers das Design auch nachträglich zu gestalten bzw. dieses auf einfache Art und Weise geänderten Umgebungsgegebenheiten anzupassen. Weiterhin ist besonders vorteilhaft, dass unterschiedlich gestaltete Designteile einer Verkaufspackung zugeordnet werden können, so dass der Benutzer schon mit dem Kauf der Abdeckanordnungen die Möglichkeit hat, aus verschiedenen Designs auszuwählen, wobei Vorteilhafterweise das bereits vorhandene oder ein beiliegendes Grundteil in jedem Fall verwendet bzw. weiter verwendet werden kann. Vorteilhafterweise sind die Designteile mit einer Deckschicht versehen, die im IMD-Verfahren (In-Mold-Decoration) aufgebracht wurde, weil durch ein solches Verfahren unterschiedliche Designs besonders kostengünstig realisiert werden können.

Weitere vorteilhafte Ausgestaltungen sind in den Unteransprüchen angegeben. Anhand zweier Ausführungsbeispiele sei der erfindungsgemäße Gegenstand näher erläutert. Dabei zeigen:
- Figur 1:: prinziphaft ein erstes Ausführungsbeispiel räumlich in Explosionsdarstellung;
- Figur 2:: prinziphaft ein zweites Ausführungsbeispiel räumlich in Explosionsdarstellung;
- Figur 3:: prinziphaft den Träger und ein zugeordnetes Designteil in einer ersten Variante vergrößert dargestellt in Unteransicht;
- Figur 4:: prinziphaft den Träger und ein zugeordnetes Designteil in einer zweiten Variante vergrößert dargestellt in Unteransicht.

Wie aus den Figuren hervorgeht, besteht eine solche Abdeckanordnung für elektrische Installationsgeräte 1 hauptsächlich aus einem mehrere Durchtrittsöffnungen 2 aufweisenden Grundteil 3, zumindest einem das Grundteil 3 am Tragekörper 4 des zugeordneten Installationsgerätes 1 festlegenden Befestigungsteil 5 und zumindest einem am Grundteil 3 und/oder am Befestigungsteil 5 festlegbaren Designteil 6, 7.

Wie des weiteren aus den Figuren hervorgeht, ist die Abdeckanordnung modular aufgebaut, d. h. für jedes abzudeckende Installationsgerät 1 ist am Grundteil 3 ein separates Designteil 6, 7 festgelegt. Die Designteile 6, 7 stehen wiederum jeweils über eine stoffschlüssige und/oder kraftschlüssige Verbindung mit einem Träger 8 in Verbindung, welcher seinerseits über entsprechende Rasteinrichtungen mit dem Grundteil 3 und/oder einem Befestigungsteil 5 in Verbindung steht. Die Designteile 6, 7 und die Träger 8 sind dabei so ausgeführt, dass die Träger 8 vollständig im Innenraum des Grundteils 3 zu liegen kommen und die Designteile 6, 7 die Randbereiche des Grundteils 3 abdeckend überkragen. Somit tritt das Grundteil 3 für den Benutzer optisch quasi nicht in Erscheinung, so dass wunschgemäß unterschiedliche Designteile 6, 7 verbaut werden können, ohne dass dabei Rücksicht auf die optischen Gegebenheiten des Grundteils 3 genommen werden muss.

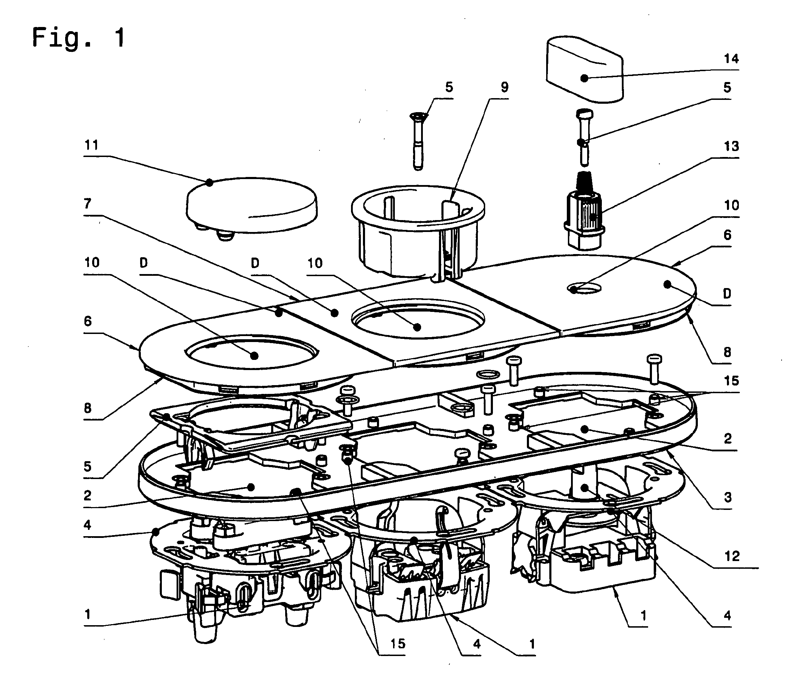

Wie insbesondere aus Figur 1 hervorgeht, weist ein erstes Ausführungsbeispiel einer solchen Abdeckanordnung ein mit drei Durchtrittsöffnungen 2 versehenes Grundteil 3 auf, welchem zwei erste Designteile 6 und ein zweites Designteil 7 zugeordnet sind. Die beiden ersten Designteile 6 sind dabei den beiden Schmalseiten des Grundteils 3 zugeordnet und weisen jeweils eine abgerundete Außenkontur auf. Zwischen diesen beiden ersten Designteilen 6 ist das zweite Designteil 7 am Grundkörper 3 festlegbar, welches eine rechteckige Außenkontur aufweist. In einem der drei Designteile 6, 7 ist eine für die Umfassung eines Steckdosenzentralstücks 9 vorgesehene Öffnung 10 und in einem weiteren der drei Designteile 6, 7 ist eine für die Umfassung einer Betätigungstaste 11 vorgesehene Öffnung 10 vorhanden. In dem dritten Designteil 6 ist eine wesentlich kleinere, für die Umfassung einer Drehschalterachse 12 bzw. eines Zwischenstücks 13 vorgesehene Öffnung 10 vorhanden. Die für die Umfassung von Steckdosenzentralstücken 9 und Betätigungstasten 11 der abzudeckenden Installationsgeräte 1 vorgesehenen Öffnungen 10 weisen hingegen identische Abmessungen auf.

Das dem Steckdosenzentralstück 9 und der Drehschalterachse 12 bzw. dem Zwischenstück 13 zugeordnete Befestigungsteil 5 ist jeweils als Schraube ausgeführt. Das der Betätigungstaste 11 zugeordnete Befestigungsteil 5 ist hingegen als aus Kunststoff hergestelltes Klemmstück ausgeführt. Das von links gesehen erste Installationsgerät 1 ist als Wippenschalter mit Betätigungstaste 11, das zweite als Schutzkontaktsteckdose mit Steckdosenzentralstück 9 und das dritte als Drehschalter mit Betätigungsknauf 14 ausgeführt. Der Betätigungsknauf 14 steht über das Zwischenteil 13 mit der Drehschalterachse 12 des Drehschalters in Verbindung. Die Betätigungstaste 11 wird am Schaltstück des Wippenschalters festgelegt. Damit die Designteile 6, 7 auf einfache Art und Weise sicher am Grundteil 3 befestigt werden können, stehen diese jeweils über eine kraftschlüssige und/oder eine stoffschlüssige Verbindung mit einem Träger 8 in Verbindung, welcher jeweils wiederum über vier Rasteinrichtungen im Innenraum des Grundteils 3 festlegbar ist. Für das Zusammenwirken mit den Rasteinrichtungen der Träger 8 sind an das Grundteil 3 in entsprechender Anzahl Rastdome 15 angeformt. Dabei sind für jeden Träger 8 vier Rastdome 15 in identischer Anordnung vorgesehen. Die Designteile 6, 7 überkragen die Randbereiche des Grundteils 3 abdeckend, so dass das Grundteil 3 für den Benutzer optisch quasi nicht in Erscheinung tritt und somit wunschgemäß unterschiedliche Designteile 6, 7 verbaut werden können, ohne dass dabei Rücksicht auf die optischen Gegebenheiten des Grundteils 3-genommen werden muss.

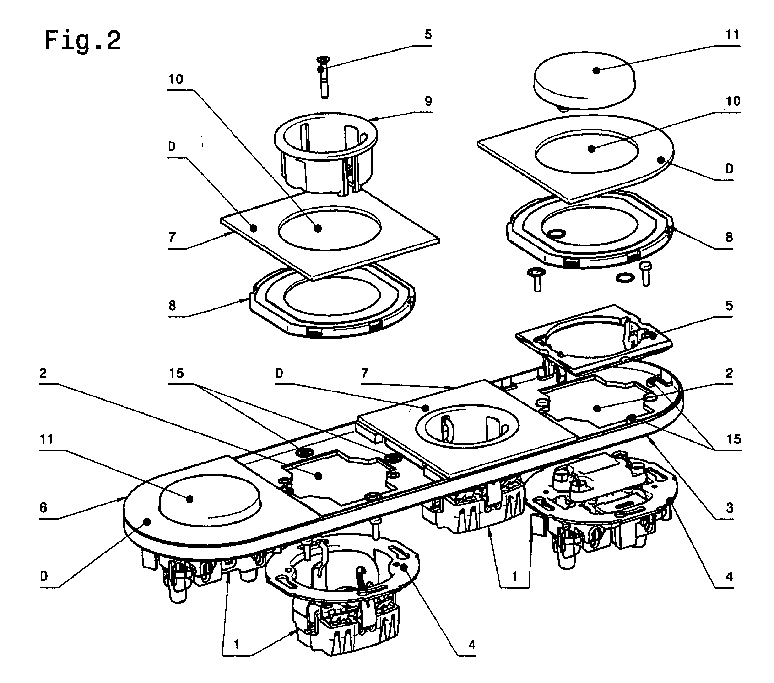

Wie insbesondere aus Figur 2 hervorgeht, weist ein zweites Ausführungsbeispiel einer solchen Abdeckanordnung ein mit vier Durchtrittsöffnungen 2 versehenes Grundteil 3 auf, welchem zwei erste Designteile 6 und zwei zweite Designteile 7 zugeordnet sind. Die beiden ersten Designteile 6 sind dabei den beiden Schmalseiten des Grundteils 3 zugeordnet und weisen jeweils eine abgerundete Außenkontur auf. Zwischen diesen beiden ersten Designteilen 6 sind zwei zweite Designteile 7 am Grundteil 3 festlegbar, welche jeweils eine rechteckige Außenkontur aufweisen. In den beiden zweiten Designteilen 7 ist jeweils eine für die Umfassung eines Steckdosenzentralstücks 9 vorgesehene Öffnung 10 und in den beiden ersten Designteilen 6 ist jeweils eine für die Umfassung einer Betätigungstaste 11 vorgesehene Öffnung 10 vorhanden. Die für die Umfassung von Steckdosenzentralstücken 9 und Betätigungstasten 11 der abzudeckenden Installationsgeräte 1 vorgesehenen Öffnungen 10 weisen dabei identische Abmessungen auf, so dass die Designteile 6, 7 oder die zugeordneten Installationsgeräte 1 ohne weiteres vom Benutzer in ihrer Position untereinander ausgetauscht werden können.

Das den beiden Steckdosenzentralstücken 9 der beiden zweiten Designteile 7 zugeordnete Befestigungsteil 5 ist jeweils als Schraube ausgeführt. Das der Betätigungstaste 11 der beiden ersten Designteile 6 zugeordnete Befestigungsteil 5 ist hingegen jeweils als aus Kunststoff hergestelltes Klemmstück ausgeführt. Das von links gesehen erste Installationsgerät 1 ist als Wippenschalter mit Betätigungstaste 11, das zweite und dritte jeweils als Schutzkontaktsteckdose mit Steckdosenzentralstück 9 und das vierte als Wippenschalter mit Betätigungstaste 11 ausgeführt. Damit die Designteile 6, 7 auf einfache Art und Weise sicher am Grundteil 3 befestigt werden können, stehen diese jeweils über eine kraftschlüssige und/oder eine stoffschlüssige Verbindung mit einem Träger 8 in Verbindung, welcher jeweils wiederum über vier Rasteinrichtungen im Innenraum des Grundteils 3 festlegbar ist. Für das Zusammenwirken mit den Rasteinrichtungen der Träger 8 sind an das Grundteil 3 in entsprechender Anzahl Rastdome 15 angeformt. Dabei sind für jeden Träger 8 vier Rastdome 15 vorgesehen. Die Designteile 6, 7 überragen die Randbereiche des Grundteils 3 abdeckend, so dass das Grundteil 3 für den Benutzer optisch quasi nicht in Erscheinung tritt und somit wunschgemäß unterschiedliche Designteile 6, 7 verbaut werden können, ohne dass dabei Rücksicht auf die optischen Gegebenheiten des Grundteils 3 genommen werden muss.

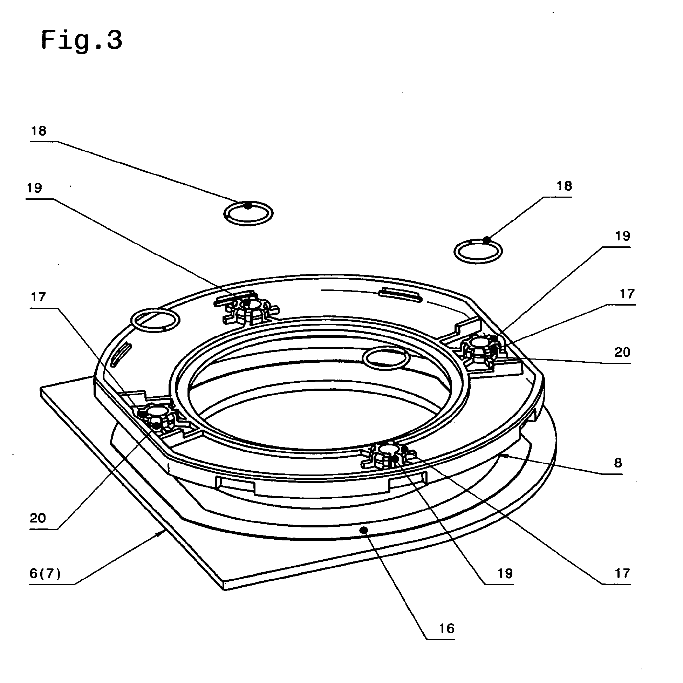

Wie insbesondere aus Figur 3 hervorgeht, ist zur Verbindung der Designteile 6, 7 mit dem Träger 8 eine stoffschlüssige Verbindung vorgesehen. Die stoffschlüssige Verbindung wird durch einen Kleber herbeigeführt, welcher jeweils ringförmig als Klebefolie 16 auf den Designteilen 6, 7 angebracht ist. Zum Schutz vor ungewollten Verklebungen ist die Klebefolie mit einer leicht abnehmbaren, der Einfachheit halber nicht dargestellten, Schutzfolie abgedeckt. Die Rasteinrichtung besteht aus vier an die Unterseite der Träger 8 angeformte Rastmittelhalter 17, welchen jeweils eine aus Metall hergestellte, ringförmig ausgebildete Rastfeder 18 zugeordnet ist. Die Rastmittelhalter 17 bestehen jeweils aus einem rohrförmigen Ansatz, welche jeweils einen Längsschlitz 19 aufweisen und zur Halterung der Rastfeder 18 jeweils mit einer Haltenut 20 versehen sind. Zur Festlegung des Trägers 8 mit dem zugeordneten Designteil 6, 7 am Grundteil 3, tauchen die an die Grundplatte des Grundteils 3 angeformten Rastdome 15 in die jeweils zugeordneten Rastmittelhalter 17 ein, wobei im Zusammenspiel mit dem zugehörigen Rastmittelhalter 17 und der zugehörigen Rastfeder 18 die für eine sichere Verbindung notwendigen Befestigungskräfte erzeugt werden. Der Einsatz einer stoffschlüssigen Verbindung bietet sich insbesondere dann an, wenn die Designteile 6, 7 aus Glas, Metall oder Holz bestehen.

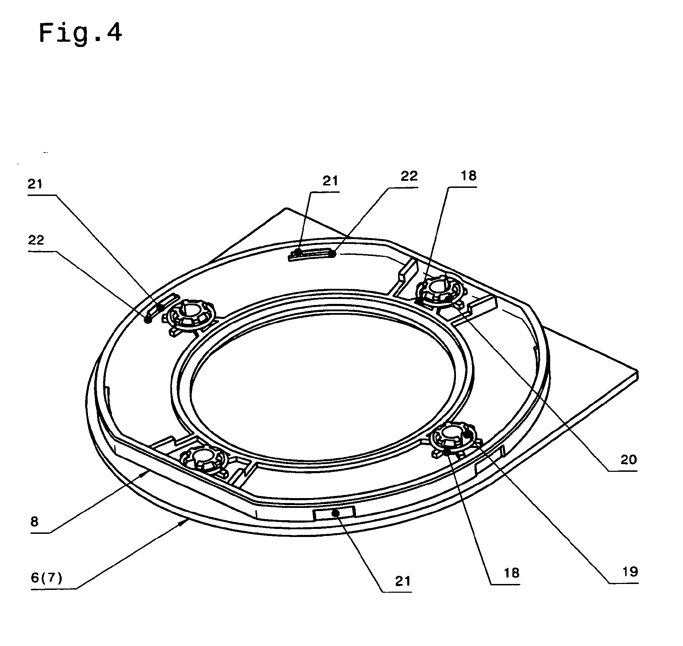

Wie insbesondere aus Figur 4 hervorgeht, ist zur Verbindung der Designteile 6, 7 mit dem Träger 8 eine kraft- bzw. formschlüssige Verbindung vorgesehen. Die kraft- bzw. formschlüssige Verbindung besteht dabei aus sechs an die Unterseite der Designteile 6, 7 angeformte Rasthaken 21, die in entsprechend ausgebildete, in den Träger 8 eingeformte Rastausnehmungen 22 eingreifen. Die Rasteinrichtung besteht aus vier angeformten Rastmittelhaltern 17, welchen jeweils eine aus Metall hergestellte, ringförmig ausgebildete Rastfeder 18 zugeordnet ist. Die Rastmittelhalter 17 bestehen jeweils aus einem rohrförmigen Ansatz, welche jeweils einen Längsschlitz 19 aufweisen und zur Halterung der Rastfeder 18 jeweils mit einer Haltenut 20 versehen sind. Zur Festlegung des Trägers 8 mit dem zugeordneten Designteil 6, 7 am Grundteil 3, tauchen die an die Grundplatte des Grundteils 3 angeformten Rastdome 15 in die jeweils zugeordneten Rastmittelhalter 17 ein, wobei im Zusammenspiel mit dem zugehörigen Rastmittelhalter 17 und der zugehörigen Rastfeder 18 die für eine sichere Verbindung notwendigen Befestigungskräfte erzeugt werden. Der Einsatz einer kraft- bzw. formschlüssigen Verbindung bietet sich insbesondere dann an, wenn die Designteile 6, 7 aus Kunststoff bestehen.

Damit sich auf einfache Art und Weise eine Vielzahl von verschiedenen Ausgestaltungen der Oberflächen solcher Designteile 6, 7 realisieren lassen, sind zumindest die dem Benutzer zugewandten Oberflächen plan ausgeführt und Bedarfsweise mit einer Designschicht D versehen. Die Designschicht D bietet die Möglichkeit auf einfache Art und Weise optische Ausgestaltungen wunschgemäß vorzusehen. Die Designschicht D wird Vorteilhafterweise im IMD-Verfahren (In-Mold-Decoration) aufgebracht. Eine hohe Flexibilität für verschiedene Einsatzfälle ist somit auf einfache Art und Weise für solche Abdeckanordnungen realisiert. Eine hohe Flexibilität für verschiedene Anwendungsfälle wird auch dadurch erreicht, weil die ersten Designteile 6 und die zweiten Designteile 7, welche für Wippenschalter und Schutzkontaktsteckdosen vorgesehen sind, identische Abmessungen aufweisen. Vorteilhaft ist dabei des weiteren, dass die Designteile 6, 7 das Grundteil 3 überkragend abdecken, so dass dieses quasi optisch nicht in Erscheinung tritt und im Hinblick auf die Verwendung unterschiedlicher Designs keine Rücksicht auf die optischen Gegebenheiten des Grundteils 3 genommen werden muss. Zudem lassen sich auf einfache Art und Weise auch Designteile miteinander kombinieren, welche aus unterschiedlichen Materialien, wie z. B. Glas, Metall, Holz oder Kunststoff hergestellt sind.

### Bezugzeichenliste

- 1.: Installationsgerät
- 2.: Durchtrittsöffnung
- 3.: Grundteil
- 4.: Tragekörper
- 5.: Befestigungsteil
- 6.: erstes Designteil
- 7.: zweites Designteil
- 8.: Träger
- 9.: Steckdosenzentralstück
- 10.: Öffnung
- 11.: Betätigungstaste
- 12.: Drehschalterachse
- 13.: Zwischenstück
- 14.: Betätigungsknauf
- 15.: Rastdom
- 16.: Klebefolie
- 17.: Rastmittelhalter
- 18.: Rastfeder
- 19.: Längsschlitz
- 20.: Haltenut
- 21.: Rasthaken
- 22.: Rastausnehmung
- D: Designschicht

## Patentansprüche

1. Abdeckanordnung für elektrische Installationsgeräte bestehend aus einem zumindest eine Durchtrittsöffnung aufweisenden Grundteil, zumindest einem das Grundteil am Tragekörper des Installationsgerätes festlegendes Befestigungsteil und zumindest einem am Grundteil festlegbaren Designteil, **dadurch gekennzeichnet, dass** am Grundteil (3) für jedes abzudeckende Installationsgerät (1) ein eigenes Designteil (6, 7) festgelegt ist, und dass zumindest einem Designteil (6, 7) ein Träger (8) zugeordnet ist, welcher haltend mit dem Grundteil (3) und/oder einem das Grundteil (3) festlegenden Befestigungsteil (5) in Wirkverbindung steht.

2. Abdeckanordnung nach Anspruch 1, **dadurch gekennzeichnet, dass** die in den Designteilen (6, 7) vorhandenen, für die Umfassung von Steckdosenzentralstücken (9) und/oder Betätigungstasten (11) der abzudeckenden Installationsgeräte (1) vorgesehenen Öffnungen (10) identische Abmessungen aufweisen.

3. Abdeckanordnung nach Anspruch 1 oder 2, **dadurch gekennzeichnet, dass** am Grundteil (3) zumindest zwei identisch ausgebildete Designteile (6, 7) festgelegt sind.

4. Abdeckanordnung nach einem der Ansprüche 1 bis 3, **dadurch gekennzeichnet, dass** am Grundteil (3) zumindest zwei den beiden Schmalseiten zugeordnete erste Designteile (6) festgelegt sind, und dass zwischen diesen beiden ersten Designteilen (6) zumindest ein zweites Designteil (7) angeordnet ist.

5. Abdeckanordnung nach einem der Ansprüche 1 bis 4, **dadurch gekennzeichnet, dass** die dem abzudeckenden Installationsgerät (1) abgewandte Hauptfläche von zumindest einem Designteil (6, 7) plan ausgeführt ist.

6. Abdeckanordnung nach einem der Ansprüche 1 bis 5 **dadurch gekennzeichnet, dass** zumindest ein Designteil (6, 7) aus Kunststoff hergestellt ist.

7. Abdeckanordnung nach einem der Ansprüche 1 bis 6 **dadurch gekennzeichnet, dass** zumindest ein Designteil (6, 7) aus Glas hergestellt ist.

8. Abdeckanordnung nach einem der Ansprüche 1 bis 7 **dadurch gekennzeichnet, dass** zumindest ein Designteil (6, 7) aus Metall hergestellt ist.

9. Abdeckanordnung nach einem der Ansprüche 1 bis 8 **dadurch gekennzeichnet, dass** zumindest die dem Installationsgerät (1) abgewandte Hauptfläche von zumindest einem Designteil (6, 7) mit einer Designschicht (D) versehen ist.

10. Abdeckanordnung nach einem der Ansprüche 1 bis 9 **dadurch gekennzeichnet, dass** die dem abzudeckenden Installationsgerät (1) abgewandte Hauptfläche von zumindest einem Designteil (6, 7) eine zur Verbindung mit einer Designschicht (D) vorgesehenen Oberflächenaufmachung aufweist.

11. Abdeckanordnung nach einem der Ansprüche 1 bis 10, **dadurch gekennzeichnet, dass** zumindest eine Designschicht (D) als Folie ausgebildet ist.

12. Abdeckanordnung nach einem der Ansprüche 1 bis 11, **dadurch gekennzeichnet, dass** zumindest eine Designschicht (D) als Lackauftrag ausgebildet ist.

13. Abdeckanordnung nach einem der Ansprüche 1 bis 12, **dadurch gekennzeichnet, dass** zumindest eine Designschicht (D) als Metallpartikelauftrag ausgebildet ist.

14. Abdeckanordnung nach einem der Ansprüche 1 bis 13, **dadurch gekennzeichnet, dass** zumindest eine Designschicht (D) im IMD-Verfahren (In-Mold-Decoration) auf zumindest ein Designteil (6, 7) aufgebracht ist.

15. Abdeckanordnung nach einem der Ansprüche 1 bis 13, **dadurch gekennzeichnet, dass** zumindest eine Designschicht (D) im IML-Verfahren (In-Mold-Labeling) auf zumindest ein Designteil (6, 7) aufgebracht ist.

16. Abdeckanordnung nach einem der Ansprüche 1 bis 15, **dadurch gekennzeichnet, dass** zumindest ein Designteil (6, 7) über eine stoffschlüssige Verbindung mit einem zugeordneten Träger (8) in Verbindung steht.

17. Abdeckanordnung nach einem der Ansprüche 1 bis 16, **dadurch gekennzeichnet, dass** zumindest ein Designteil (6, 7) über eine kraftschlüssige Verbindung mit einem zugeordneten Träger (8) in Verbindung steht.

18. Abdeckanordnung nach einem der Ansprüche 1 bis 17, **dadurch gekennzeichnet, dass** zumindest ein Träger (8) einem Designteil (6, 7) einstückig zugeordnet ist.

## Claims

1. Cover arrangement for electrical installation devices consisting of a base component having at least one insertion opening, at least one fastening component locating the base component on the supporting member of the installation device, and at least one design constituent that can be located on the base component, **characterised in that** an individual design constituent (6, 7) is located on the base component (3) for each installation device (1) to be covered, and that a mount (8) is assigned to at least one design constituent (6, 7) which is operatively connected in a retaining manner to the base component (3) and/or to a fastening component (5) locating the base component (3).

2. Cover arrangement in accordance with Claim 1, **characterised in that** the apertures (10) present in the design constituents (6, 7) that are provided for encircling central elements of socket outlets (9) and/or control buttons (11) of the installation devices (1) to be covered show identical dimensions.

3. Cover arrangement in accordance with Claim 1 or Claim 2, **characterised in that** at least two identically formed design constituents (6, 7) are located on the base component (3).

4. Cover arrangement in accordance with any of Claims 1 to 3, **characterised in that** at least two first design constituents (6) are located on the base component (3) and assigned to its two narrow sides, and that at least one second design constituent (7) is located between these two first design constituents (6).

5. Cover arrangement in accordance with any of Claims 1 to 4, **characterised in that** the main surface of at least one design constituent (6, 7) facing away from the installation device (1) to be covered is of a flat execution.

6. Cover arrangement in accordance with any of Claims 1 to 5, **characterised in that** at least one design constituent (6, 7) is made of synthetic material.

7. Cover arrangement in accordance with any of Claims 1 to 6, **characterised in that** at least one design constituent (6, 7) is made of glass.

8. Cover arrangement in accordance with any of Claims 1 to 7, **characterised in that** at least one design constituent (6, 7) is made of metal.

9. Cover arrangement in accordance with any of Claims 1 to 8, **characterised in that** at least the main surface of at least one design constituent (6, 7) facing away from the installation device (1) is provided with a design layer (D).

10. Cover arrangement in accordance with any of Claims 1 to 9, **characterised in that** the main surface of at least one design constituent (6, 7) facing away from the installation device (1) to be covered shows a surface make-up provided for the purpose of attachment to a design layer (D).

11. Cover arrangement in accordance with any of Claims 1 to 10, **characterised in that** at least one design layer (D) is formed as a foil.

12. Cover arrangement in accordance with any of Claims 1 to 11, **characterised in that** at least one design layer (D) is formed as a lacquer coating.

13. Cover arrangement in accordance with any of Claims 1 to 12, **characterised in that** at least one design layer (D) is formed as a metal particle application.

14. Cover arrangement in accordance with any of Claims 1 to 13, **characterised in that** at least one design layer (D) is applied to at least one design constituent (6, 7) in an IMD (In-Mould-Decoration) process.

15. Cover arrangement in accordance with any of Claims 1 to 13, **characterised in that** at least one design layer (D) is applied to at least one design constituent (6, 7) in an IML (In-Mould-Labelling) process.

16. Cover arrangement in accordance with any of Claims 1 to 15, **characterised in that** at least one design constituent (6, 7) is attached to an associated mount (8) by means of an integral connection.

17. Cover arrangement in accordance with any of Claims 1 to 16, **characterised in that** at least one design constituent (6, 7) is attached to an associated mount (8) by means of a force-fit connection.

18. Cover arrangement in accordance with any of Claims 1 to 17, **characterised in that** at least one mount (8) is assigned to a design constituent (6, 7) as an integral part.

## Revendications

1. Ensemble couvercle pour appareils d'installation électriques consistant en une partie de base présentant au moins un orifice de passage, au moins une pièce de fixation fixant la partie de base au corps de support de l'appareil d'installation et au moins une partie de design fixée sur la partie de base, **caractérisé en ce qu'**une propre partie de design (6, 7) est fixée sur la partie de base (3) pour chaque appareil d'installation (1) à recouvrir, et qu'un support (8), en connexion active en blocage avec la partie de base (3) et/ou une pièce de fixation (5) fixant la partie de base, est affecté à au moins une partie de design (6, 7).

2. Ensemble couvercle selon la revendication 1, **caractérisé en ce que** les orifices (10) prévus pour l'entourage de pièces centrales de prise de courant (9) et/ou de touches d'actionnement (11) des appareils d'installation à recouvrir (1) ont des dimensions identiques.

3. Ensemble couvercle selon la revendication 1 ou 2, **caractérisé en ce qu'**au moins deux pièces de design (6, 7) de configuration identique sont fixées sur la pièce de base (3).

4. Ensemble couvercle selon l'une des revendications 1 à 3, **caractérisé en ce qu'**au moins deux premières pièces de design (6) affectées aux deux côtés étroits sont fixées sur la pièce de base (3) et qu'au moins une deuxième pièce de design (7) est disposée entre ces deux premières pièces de design.

5. Ensemble couvercle selon l'une des revendications 1 à 4, **caractérisé en ce que** la face principale opposée à l'appareil d'installation (1) à recouvrir est réalisée dans le plan par au moins une pièce de design (6, 7).

6. Ensemble couvercle selon l'une des revendications 1 à 5, **caractérisé en ce qu'**au moins une pièce de design (6, 7) est réalisée en matière synthétique.

7. Ensemble couvercle selon l'une des revendications 1 à 6, **caractérisé en ce qu'**au moins une pièce de design (6, 7) est réalisée en verre.

8. Ensemble couvercle selon la revendication 1 à 7, **caractérisé en ce qu'**au moins une pièce de design (6, 7) est réalisée en métal.

9. Ensemble couvercle selon l'une des revendications 1 à 8, **caractérisé en ce qu'**au moins la face principale opposée à l'appareil d'installation (1) à recouvrir est dotée d'au moins une pièce de design (6, 7) avec une couche de design (D).

10. Ensemble couvercle selon l'une des revendications 1 à 9, **caractérisé en ce que** la face principale opposée à l'appareil d'installation (1) à recouvrir d'au moins une pièce de design (6, 7) présente une liaison avec un conditionnement de surface doté d'une couche de design (D).

11. Ensemble couvercle selon l'une des revendications 1 à 10, **caractérisé en ce qu'**au moins une couche de design (D) est réalisée en feuille.

12. Ensemble couvercle selon l'une des revendications 1 à 11, **caractérisé en ce qu'**au moins une couche de design (D) est réalisée en application de laque.

13. Ensemble couvercle selon l'une des revendications 1 à 12, **caractérisé en ce qu'**au moins une couche de design (D) est réalisée en application de particules métalliques.

14. Ensemble couvercle selon l'une des revendications 1 à 13, **caractérisé en ce qu'**au moins une couche de design (D) est appliquée selon le procédé IMD (In-Mold-Decoration/décoration dans le moule) sur au moins une pièce de design (6, 7).

15. Ensemble couvercle selon l'une des revendications 1 à 13, **caractérisé en ce qu'**au moins une couche de design (D) est appliquée selon le procédé IML (In-Mold-labelling/étiquetage dans le moule) sur au moins une pièce de design (6, 7).

16. Ensemble couvercle selon l'une des revendications 1 à 15, **caractérisé en ce qu'**au moins une pièce de design (6, 7) est reliée à un support affecté (8) via une liaison à adhérence de matière.

17. Ensemble couvercle selon l'une des revendications 1 à 16, **caractérisé en ce qu'**au moins une pièce de design (6, 7) est reliée à un support affecté (8) via une liaison à adhérence de force.

18. Ensemble couvercle selon l'une des revendications 1 à 17, **caractérisé en ce qu'**au moins un support (8) est affecté intégralement à une pièce de design (6, 7).
